# EUROPEAN PATENT APPLICATION

(11) **EP 2 568 193 A1**
(43) Date of publication of application: **13.03.2013**
(21) Application number: 11774735.2
(22) Date of filing: 23.03.2011
(51) Int. Cl.: F16F 9/14, F16F 9/12

(54) **ROTATIONAL DAMPER**

(30) Priority: 26.04.2010 JP 2010100929
(71) Applicant: Sugatsune Kogyo CO., LTD., Tokyo 101-8633 (JP)
(72) Inventor: YOSHIDA Masahiro, Tokyo 101-8633 (JP)
(74) Representative: Small, Gary James
(86) International application number: PCT/JP2011/056961
(87) International publication number: WO 2011/135951

(57) **Abstract**

Elongated raised portions 1f, 1g are formed in an inner circumferential surface of a receiving hole 1b of a damper body 1. The elongated raised portions 1f, 1g are disposed in an intermediate portion of the receiving hole 1b between an opening and a bottom 1a of the receiving hole 1b. A large-diameter shaft portion 2a to be fitted into an end portion of the receiving hole 1b on the opening side and an annular protrusion 2d to be fitted into an end portion of the receiving hole 1b on the bottom side are formed in an outer circumferential surface of the rotor 2. The rotor 2 is prohibited from getting out of the receiving hole 1b by abutment of the annular protrusion 2d against end surfaces of the elongated raised portions 1f, 1g on the bottom 1a side.

## Description

### Field of the Invention

The present invention relates to a rotational damper provided between a body and a rotatable member rotatably supported by the body, the rotational damper maintaining a rotation of the rotatable member in one direction at a low speed.

### Background of the Invention

As disclosed in Patent Document 1 listed below, a rotational damper generally includes a damper body having a receiving hole formed therein and a rotor rotatably inserted into the receiving hole. An elongated raised portion extending in an axial direction of the receiving hole is formed in an inner circumferential surface of the receiving hole. A valve is provided in an outer circumferential surface of the rotor. An annular space formed between the inner circumferential surface of the receiving hole and the outer circumferential surface of the rotor is divided into a high pressure chamber and a low pressure chamber by the elongated raised portion and the valve. The high pressure chamber and the low pressure chamber are filled with fluid such as viscose fluid.

In the rotational damper having the above mentioned features, the valve closes between the high pressure chamber and the low pressure chamber when the rotor is rotated in one direction. As a result, the rotation of the rotor in the one direction is maintained at a low speed. When the rotor is rotated in the other direction, the valve opens between the high pressure chamber and the low pressure chamber, thereby allowing the high pressure chamber and the low pressure chamber to communicate with each other. Therefore, the rotor can be rotated at a high speed.

### Prior Art Documents

### Patent Documents

Patent Document 1: Japanese Unexamined Patent Application Publication No. 2003-194124

### Summary of the Invention

### Problem to be Solved by the Invention

In the conventional rotational damper described above, it is necessary to make an arrangement to prohibit the rotor from getting out of the receiving hole of the damper body. Typically, a lid is threadably fixed to an opening of the receiving hole so that the lid may prohibit the rotor from getting out. However, use of the lid increases of the number of components, which increases manufacturing cost of the rotational damper. Moreover, time and labor is required for threadably fixing the lid, which further increases the manufacturing cost of the rotational damper.

### Solution to the Problem

To solve the problem mentioned above, the present invention provides a rotational damper including: a damper body having a receiving hole, one end portion of the receiving hole closed by a bottom, the other end portion of the receiving hole being open; a rotor, a basal end portion of the rotor being insertable into the receiving hole from an opening of the receiving hole, the basal end portion of the rotor received in the receiving hole such that the rotor is rotatable about an axis of the receiving hole; a first elongated raised portion extending in a direction of the axis of the receiving hole formed in an inner circumferential surface of the receiving hole; and a second elongated raised portion disposed in an outer circumferential surface of the rotor, the first elongated raised portion and the second elongated raised portion dividing an annular space formed between the inner circumferential surface of the receiving hole and the outer circumferential surface of the rotor into a high pressure chamber and a low pressure chamber, characterized in that: the first elongated raised portion is disposed spaced from the bottom of the receiving hole toward the opening; an annular protrusion is formed in the outer circumferential surface of the rotor, the annular protrusion rotatably received in a space between the bottom of the receiving hole and the first elongated raised portion in the receiving hole; a pass-through groove is formed in the annular protrusion, the pass-through groove extending from one end surface of the annular protrusion to the other end surface of the annular protrusion, the first elongated raised portion being able to pass through the pass-through groove when the rotor is positioned in a predetermined initial position in a circumferential direction; and, the rotor is prohibited from getting out of the receiving hole by abutment of the annular protrusion against the first elongated raised portion when the rotor is rotated and spaced from the initial position in the circumferential direction after the first elongated raised portion passes through the pass-through groove accompanying insertion of the rotor into the receiving hole.
In this case, it is preferable that the rotor is provided with a blocker, the blocker is movable from an allowing position to a blocking position, but the blocker is non-movable from the blocking position to the allowing position, the blocker in the allowing position allowing the rotor to be positioned in the initial position, the blocker in the blocking position prohibiting the rotor from being positioned in the initial position, thereby prohibiting the first elongated raised portion from passing through the pass-through groove; the rotational damper further comprises a mover; and, the mover moves the blocker from the allowing position to the blocking position when the rotor is rotated from the initial position in a predetermined abutment direction up to a predetermined abutment position after the rotor is inserted into the receiving hole from the opening of the receiving hole until the first elongated raised portion passes through the pass-through groove.
Preferably, when the blocker is positioned in the allowing position, the blocker is positioned in front of the pass- through groove in the abutment direction and the blocker allows the first elongated raised portion to pass through the pass-through groove; and, when the blocker is positioned in the blocking position, at least a portion of the blocker is protruded toward inside of the pass-through groove in a circumferential direction and the portion of the blocker is abutted against the first elongated raised portion, thereby prohibiting the rotor from being rotated from the abutment position side to the initial position, thereby prohibiting the first elongated raised portion from being positioned in a same position as the pass-through groove in the circumferential direction.
Preferably, the mover is an abutment portion provided in the inner circumferential surface of the receiving hole; the abutment portion is abutted against the blocker positioned in the allowing position when the rotor is rotated from the initial position to a position a predetermined distance before the abutment position; and after that, the abutment portion moves the blocker from the allowing position to the blocking position accompanying the rotation of the rotor to the abutment position.
Preferably, the first elongated raised portion is also used as the abutment portion.
Preferably, a communication passage allowing the high pressure chamber and the low pressure chamber to communicate with each other is formed in the second elongated raised portion; a valve that opens and closes the communication passage is disposed in the rotor; the blocker is integrally disposed in the valve; and, the valve is movable between the allowing position and the blocking position together with the blocker.
Preferably, an engagement mechanism that prohibits the blocker from moving from the blocking position toward the allowing position is provided between the rotor and the blocker.

### Advantageous Effects of the Invention

According to the present invention having the above-mentioned features, the rotor is prohibited from getting out of the damper body by the abutment of the annular protrusion against an end face of the first elongated raised portion closer to the bottom. Therefore, there is no need for a lid for prohibiting the rotor from getting out of the damper body, and there is no need for labor for threadably fixing the lid to the damper body. Thus, the manufacturing cost of the rotational damper can be reduced.

### Brief Description of the Drawings

FIG. 1 is a perspective view of a first embodiment of a rotational damper according to the present invention.
FIG. 2 is a side view of the first embodiment of the present invention.
FIG. 3 is a front view of the first embodiment of the present invention.
FIG. 4 is an enlarged cross-sectional view taken along line X-X of FIG. 2, showing a rotor rotated in a first direction up to a vicinity of a first limit position.
FIG. 5 is a cross-sectional view similar to FIG. 4, showing the rotor rotated in a second direction up to a second limit position.
FIG. 6 is a cross-sectional view similar to FIG. 4, showing the rotor rotated in the first direction up to an intermediate position between the first limit position and the second limit position.
FIG. 7 is a cross-sectional view similar to FIG. 4, showing the rotor rotated in the second direction up to the intermediate position between the first limit position and the second limit position.
FIG. 8 is a cross-sectional view taken along line X-X of FIG. 4.
FIG. 9 is a cross-sectional view taken along line Y-Y of FIG. 4.
FIG. 10 is an exploded perspective view of the first embodiment of the present invention.
FIG. 11 is a side view of a damper body according to the first embodiment of the present invention.
FIG. 12 is a front view of the damper body.
FIG. 13 is a perspective view of the damper body.
FIG. 14 is a cross-sectional view taken along line X-X of FIG. 12.
FIG. 15 is a cross-sectional view taken along line Y-Y of FIG. 12.
FIG. 16 is a side view of the rotor according to the first embodiment of the present invention.
FIG. 17 is a plan view of the rotor.
FIG. 18 is a view on arrow X of FIG. 16.
FIG. 19 is a view on arrow Y of FIG. 16.
FIG. 20 is a cross-sectional view taken along line X-X of FIG. 17.
FIG. 21 is a cross-sectional view taken along line Y-Y of FIG. 17.
FIG. 22 is a perspective view of the rotor viewed from a first direction.
FIG. 23 is a perspective view of the rotor viewed from a second direction.
FIG. 24 is a perspective view of the rotor viewed from a third direction.
FIG. 25 is a perspective view of the rotor viewed from a fourth direction.
FIG. 26 is a plan view of a valve according to the first embodiment of the present invention.
FIG. 27 is a side view of the valve.
FIG. 28 is a perspective view of the valve viewed from one direction.
FIG. 29 is a perspective view of the valve viewed from the other direction.
FIG. 30 is a perspective view of the first embodiment of the present invention, showing the rotor before being inserted into the damper body.
FIG. 31 is a perspective view of the first embodiment of the present invention, showing the rotor and the valve after the rotor is inserted into the damper body.
FIG. 32 is a perspective view similar to FIG. 30, showing a rotor according to a second embodiment of the present invention.
FIG. 33 is a perspective view similar to FIG. 31, but of the second embodiment of the present invention.
FIG. 34 is a cross-sectional view similar to FIG. 6, but of the second embodiment of the present invention, showing a blocker in a blocking position.
FIG. 35 is a cross-sectional view of the second embodiment of the present invention similar to FIG. 34, showing a valve in a closed position.
FIG. 36 is a cross-sectional view similar to FIG. 8, but of a third embodiment of the present invention.
FIG. 37 is a partially omitted perspective view of a rotor and a valve used in a fourth embodiment of the present invention, showing the rotor and the valve engaged with each other.
FIG. 38 is a partially omitted perspective view of the rotor and the valve used in the fourth embodiment of the present invention, showing the rotor and the valve disengaged from each other.
FIG. 39 is a perspective view of a rotor and a valve used in a fifth embodiment of the present invention, showing the valve in an open position.
FIG. 40 is a perspective view of the rotor and the valve used in the fifth embodiment of the present invention, showing the valve in a closed position.
FIG. 41 is an exploded perspective view of the rotor and the valve used in the fifth embodiment of the present invention.
FIG. 42 is a side view of a toilet in which a rotational damper according to the present invention is used.

### Description of the Preferred Embodiments

A best mode for carrying out the invention will be described hereinafter with reference to the drawings.

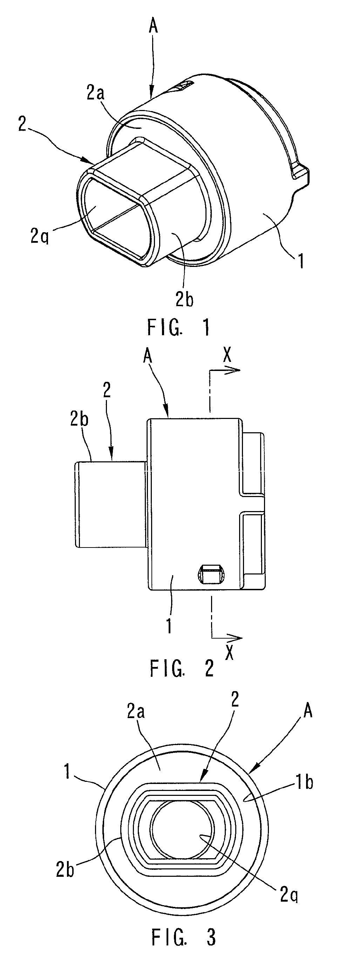

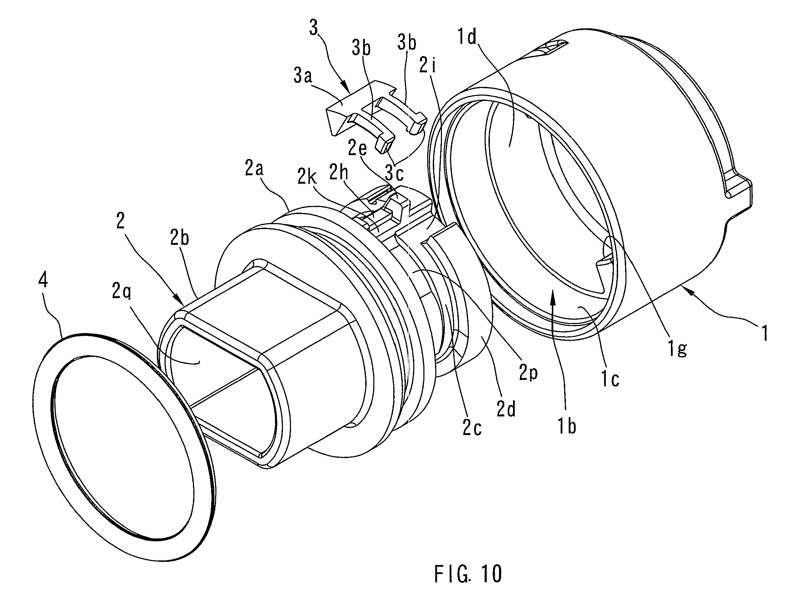

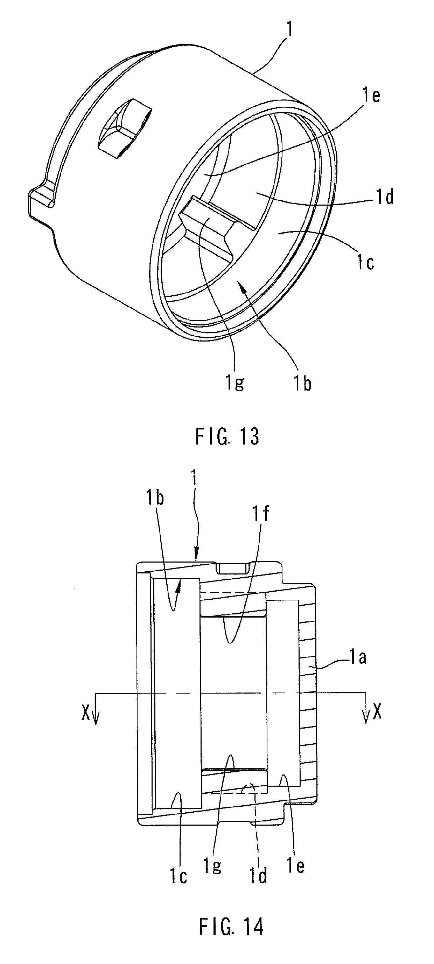

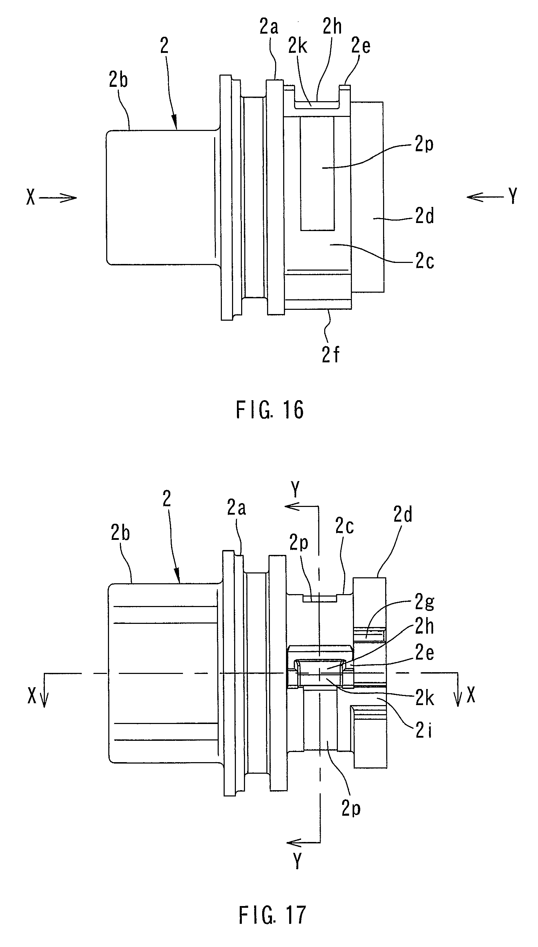

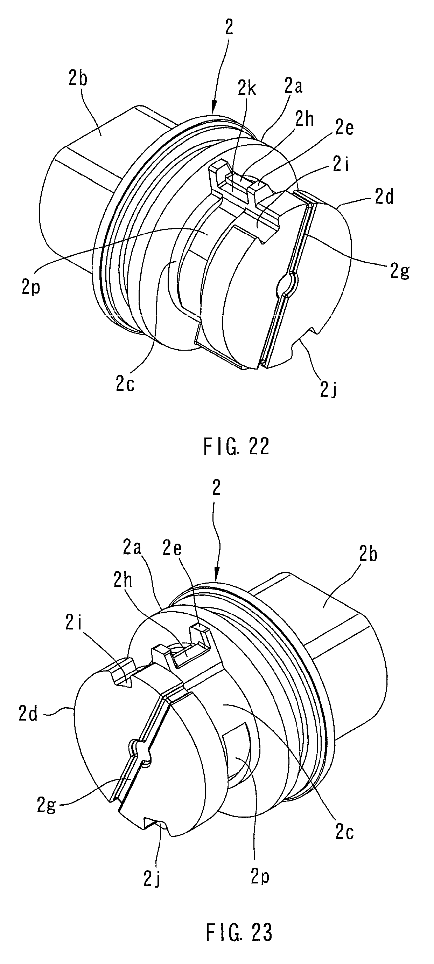

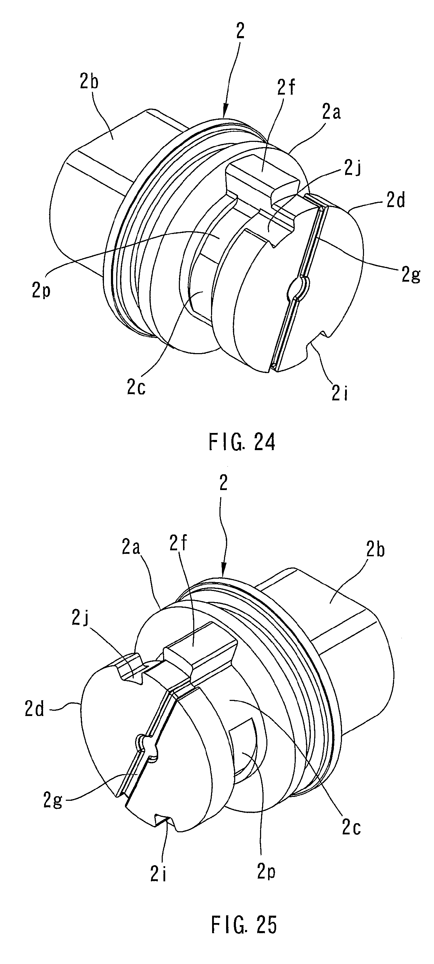

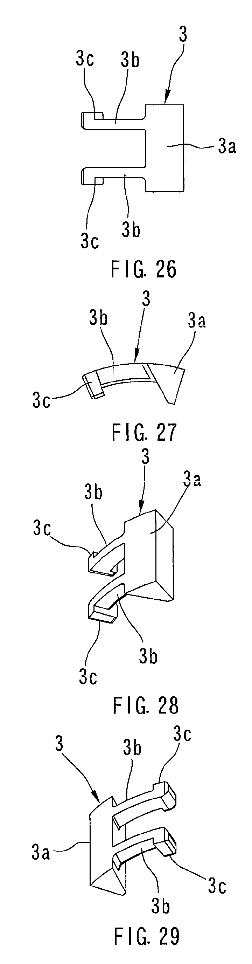

FIGS. 1 to 31 show a first embodiment of the present invention. As particularly shown in FIG. 10, a rotational damper A according to the first embodiment includes a damper body 1, a rotor 2 and a valve 3.

The damper body 1 is made of metal or resin. In this embodiment, the damper body 1 is made by molding hard resin. As shown in FIGS. 1 to 15 and FIG. 30, the damper body 1 has a bottomed circular cylindrical configuration having an opening at one end and a bottom 1a in the other end portion. An inside of the damper body 1 is a receiving hole 1b. It is not required that the damper body 1 should be formed into a cylindrical or a circular cylindrical configuration as long as the damper body 1 includes the receiving hole 1b. The damper body 1 may be formed into a block configuration. The damper body 1 is to be non-rotatably mounted to one of a body and a rotating member (neither is shown in the drawings) such as a toilet bowl and a toilet seat.

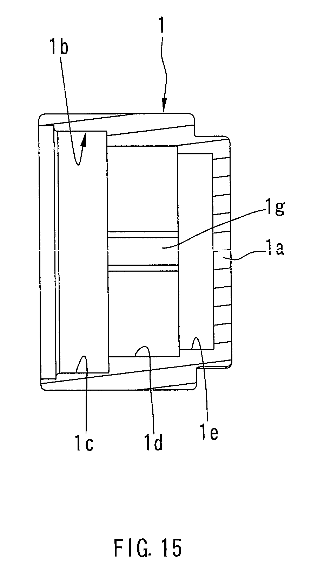

As particularly shown in FIG. 15, the receiving hole 1b includes a large-diameter hole portion 1c, a middle-diameter hole portion 1d having a smaller diameter than the large-diameter hole portion 1c and a small-diameter hole portion 1e having a smaller diameter than the middle-diameter hole portion 1d. The large-diameter hole portion 1c, the middle-diameter hole portion 1d and the small-diameter hole portion 1 e are arranged in a direction from an opening to the bottom 1 a of the receiving hole 1b in this order and are coaxially arranged. Alternatively, an inner diameter of the receiving hole 1b may be constant throughout its length.

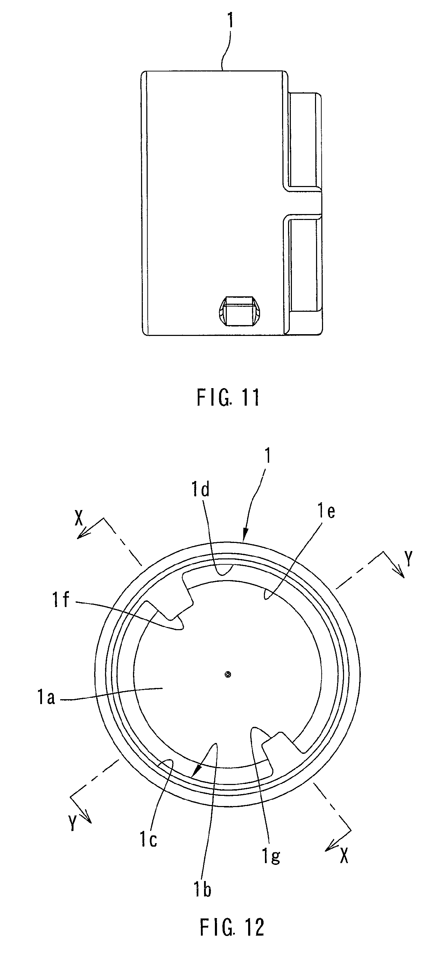

As shown in FIG. 12, two elongated raised portions 1f, 1g are formed in an inner circumferential surface of the middle-diameter hole portion 1d. Each of the elongated raised portions 1f, 1g extends from one end to the other end of the middle-diameter hole portion 1d along an axis of the middle-diameter hole portion 1d, that is an axis of the receiving hole 1b. The two elongated raised portions 1f, 1g are disposed generally 180 degrees spaced from each other in a circumferential direction. The two elongated raised portions 1f, 1g have a same height (dimension in a radial direction of the receiving hole 1b). Each of inner surfaces of the elongated raised portions 1f, 1g facing inside in a radial direction of the receiving hole 1b is a circular arcuate surface extending about the axis of the receiving hole 1b. An inner diameter of the circular arcuate surface is smaller than an inner diameter of the small-diameter hole portion 1e. A width of the elongated raised portion 1f in the circumferential direction is greater than a width of the elongated raised portion 1g in the circumferential direction. Therefore, the two elongated raised portions 1f, 1g are formed in different shapes and dimensions. Alternatively, the two elongated raised portions 1f, 1g may be formed in the same shape and the same dimensions.

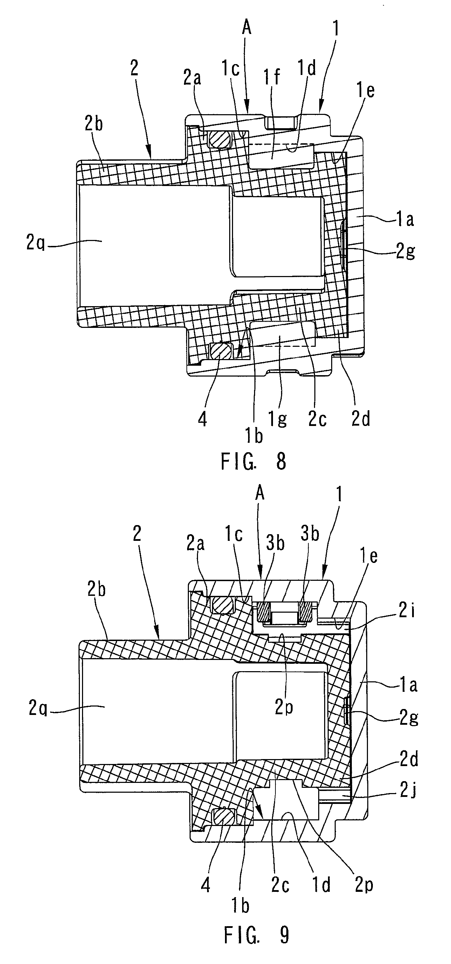

The rotor 2 is made of metal or resin. In this embodiment, the rotor 2 is made by molding hard resin into a rod configuration. As shown in FIGS. 8 to 10, 16 to 25, 30 and 31, a large-diameter shaft portion 2a is formed in a middle portion of the rotor 2 in a longitudinal direction. The large-diameter shaft portion 2a is rotatably fitted in the large-diameter hole portion 1c of the damper body 1. By this arrangement, the rotor 2 is rotatably disposed in the damper body 1. The large-diameter shaft portion 2a is fitted in the large-diameter hole portion 1c with generally no gap between an outer circumferential surface of the large-diameter shaft portion 2a and an inner circumferential surface of the large-diameter hole portion 1c, which gap is surely sealed by a sealing member 4 such as an O-ring. As a result, a sealed space is formed between a portion of an inner circumferential surface of the receiving hole 1b that is closer to the bottom 1a than the large-diameter shaft portion 2a and a portion of an outer circumferential surface of the rotor 2 that is closer to the bottom 1a than the large-diameter shaft portion 2a. The sealed space is filled with fluid (not shown) such as viscose fluid.

A connecting shaft portion 2b is formed coaxially with the large-diameter shaft portion 2a in one end portion (left end portion in FIGS. 8 to 10. The one end portion is to be referred to as a distal end portion and the other end portion is to be referred to as a basal end portion hereinafter.) of the rotor 2 in the longitudinal direction. The connecting shaft portion 2b is protruded outside from the opening of the damper body 1. The connecting shaft portion 2b is non-rotatably mounted to the other of the body and the rotating member. Accordingly, when the rotating member is rotated with respect to the body, the rotor 2 is rotated with respect to the damper body 1. A blind hole 2q extending to the basal end portion of the rotor 2 is formed in a distal end surface of the connecting shaft portion 2b. The blind hole 2q is formed to reduce a weight of the rotor 2, and is not necessarily formed.

A damper shaft portion 2c is formed in the basal end portion (right end portion in FIGS. 8 to 10) of the rotor 2 in the longitudinal direction. The damper shaft portion 2c is formed continuously from and coaxially with the large-diameter shaft portion 2a. An outer diameter of the damper shaft portion 2c is a same as a diameter of the circular arcuate surfaces forming the surfaces of the elongated raised portions 1f, 1g facing inside in the radial direction. Accordingly, an outer circumferential surface of the damper shaft portion 2c is slidingly and rotatably contacted with the elongated raised portions 1f, 1g.

An annular protrusion 2d is formed in a basal end portion of the damper shaft portion 2c. An outer diameter of the annular protrusion 2d is a same as the inner diameter of the small-diameter hole portion 1e. Accordingly, the outer diameter of the annular protrusion 2d is larger than a diameter of a circle formed by the inner surfaces of the two elongated raised portions 1f, 1g facing inside in the radial direction. The annular protrusion 2d has a same length as the small-diameter hole portion 1e. The annular protrusion 2d is rotatably fitted in the small-diameter hole portion 1e and extends through an entire length of the small-diameter hole portion 1e with substantially no gap therebetween.

A distance between an end surface of the large-diameter shaft portion 2a and an end surface of the annular protrusion 2d opposed to each other is same as the length of the elongated raised portions 1f, 1g. A basal end surface of the large-diameter shaft portion 2a is in contact with distal end surfaces of the elongated raised portions 1f, 1g. A distal end surface of the annular protrusion 2d is in contact with basal end surfaces of the elongated raised portions 1f, 1g. By this arrangement, the rotor 2 is positioned in the damper body 1 such that the rotor 2 is not movable in an axial direction of the receiving hole 1b. Moreover, the rotor 2 is prohibited from getting out of the receiving hole 1b by abutment of the annular protrusion 2d against the elongated raised portions 1f, 1g. The end surfaces of the large-diameter shaft portion 2a and the annular protrusion 2d are rotatably contacted with the end surfaces of the elongated raised portions 1f, 1g.

By the respective contact of the end surfaces of the large-diameter shaft portion 2a and the annular protrusion 2d with the end surfaces of the elongated raised portions 1f, 1g, an annular space is defined inside the damper body 1 by the inner circumferential surface of the middle-diameter hole portion 1d, the outer circumferential surface of the damper shaft portion 2c, the basal end surface of the large-diameter shaft portion 2a and the distal end surface of the annular protrusion 2d. The annular space is divided into two spaces by the elongated raised portions 1f, 1g.

Two protrusions 2e, 2f are formed in the outer circumferential surface of the damper shaft portion 2c. The two protrusions 2e, 2f are disposed generally 180 degrees spaced from each other in a circumferential direction. Moreover, the two protrusions 2e, 2f are disposed so as to be respectively positioned in the two spaces divided by the elongated raised portions 1f, 1g. The protrusions 2e, 2f extend from the large-diameter shaft portion 2a to the annular protrusion 2d. That is, the protrusions 2e, 2f have a same length as the middle-diameter hole portion 1d. Moreover, outer surfaces of the protrusions 2e, 2f in the radial direction of the receiving hole 1b are slidably contacted with the inner circumferential surface of the middle-diameter hole portion 1d in a rotatable manner. By this arrangement, each of the two spaces divided by the elongated raised portions 1f, 1g is further divided into two spaces. As a result, four spaces in total are formed inside the middle-diameter hole portion 1d. Of the four spaces, a space defined by the elongated raised portion (first elongated raised portion) 1f and the protrusion (second elongated raised portion) 2e is referred to as a first high pressure chamber (high pressure chamber) 5, a space defined by the elongated raised portion 1 g and the protrusion 2f is referred to as a second high pressure chamber 6, a space defined by the elongated raised portion 1f and the protrusion 2f is referred to as a damper chamber 7 and a space defined by the elongated raised portion 1g and the protrusion 2e is referred to as a low pressure chamber 8.

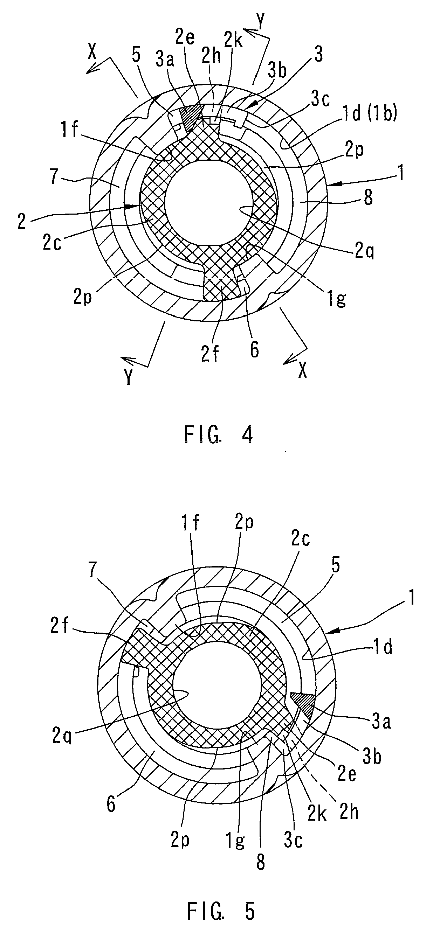

The first high pressure chamber 5 and the second high pressure chamber 6 are constantly in communication with each other via a communication groove 2g formed in the annular protrusion 2d. Other chambers are isolated from each other. Specifically, the first high pressure chamber 5 and the low pressure chamber 8 are isolated from each other by the protrusion 2e, the second high pressure chamber 6 and the damper chamber 7 are isolated from each other by the protrusion 2f, and the second high pressure chamber 6 and the low pressure chamber 8 are isolated from each other by the elongated raised portion 1g. However, the chambers isolated from each other can communicate with each other via a slight gap formed between an inner surface of the receiving hole 1b and an outer surface of the rotor 2. The gap serves as an orifice for fluid flowing between the chambers accompanying the rotation of the rotor 2. Moreover, as to be described later, when the rotor 2 is rotated in a clockwise direction in FIGS. 4 to 7, the first high pressure chamber 5 and the low pressure chamber 8 communicate with each other via a valve groove 2h.

As described above, the second high pressure chamber 6 and the damper chamber 7 are isolated from each other by the protrusion 2f. Therefore, when the rotor 2 is rotated in a counter-clockwise direction in FIGS. 4 to 7, pressure is increased in the second high pressure chamber 6. This causes the fluid in the second high pressure chamber 6 to flow into the damper chamber 7 via the slight gap formed between the inner surface of the receiving hole 1b and the outer surface of the rotor 2. Rotation of the rotor 2 in the counter-clockwise direction can be maintained at a relatively low speed by resistance of the fluid flowing through the gap. When the rotor 2 is rotated in a clockwise direction in FIGS. 4 to 7, pressure is increased in the damper chamber 7. This causes the fluid in the damper chamber 7 to flow into the second high pressure chamber 6 via the slight gap formed between the inner surface of the receiving hole 1b and the outer surface of the rotor 2. Rotation of the rotor 2 in the clockwise direction can be maintained at a relatively low speed by resistance of the fluid flowing through the gap. Thus, the rotation of the rotor 2, regardless of whether in the clockwise direction or in the counter-clockwise direction, can be maintained at a relatively low speed.

The valve groove (communication path) 2h is formed in a central portion of the protrusion 2e in a longitudinal direction of the protrusion 2e (axial direction of the receiving hole 1b). The valve groove 2h extends across the protrusion 2e in a circumferential direction of the rotor 2. Via the valve groove 2h, the first high pressure chamber 5 and the low pressure chamber 8, which are arranged adjacent to each other in the circumferential direction with the protrusion 2e therebetween, communicate with each other. Moreover, the valve groove 2h has an enough flow cross-sectional area to allow the fluid to flow substantially without resistance when the fluid in the low pressure chamber 8 flows into the first high pressure chamber 5 via the valve groove 2h. The valve groove 2h is opened and closed by the valve 3 as will be described below.

The valve 3 is made of an elastic resin and includes a valve body 3a. The valve body 3a is disposed in the first high pressure chamber 5 such that the valve body 3a adjoins the protrusion 2e. A length of the valve body 3a in the axial direction of the receiving hole 1b is a same as a distance between the large-diameter shaft portion 2a and the annular protrusion 2d. Opposite end surfaces of the valve body 3a in a longitudinal direction are respectively slidably contacted with surfaces of the large-diameter shaft portion 2a and the annular protrusion 2d opposed to each other. The valve body 3a is formed in a generally triangular cross-sectional configuration in which a width of the valve body 3a becomes gradually narrower towards inside and wider towards outside in the radial direction of the receiving hole 1b. A surface of the valve body 3a located outside in the radial direction is a circular arcuate surface having a radius of curvature generally a same as a radius of curvature of the inner circumferential surface of the middle-diameter hole portion 1d. An outer surface of the valve body 3a is slidably contacted with the inner circumferential surface of the middle-diameter hole portion 1d such that the valve body 3a is rotatable in the circumferential direction.

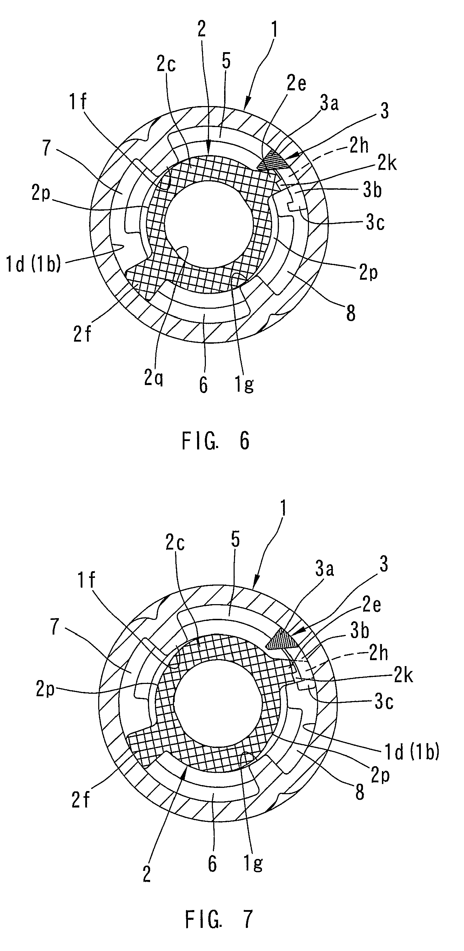

When the rotor 2 is rotated in the counter-clockwise direction in FIGS. 4 to 7, the fluid in the first high pressure chamber 5 flows toward the low pressure chamber 8 via the valve groove 2h. The flow of the fluid presses and moves the valve body 3 a toward the protrusion 2e, and as shown in FIGS. 4 and 6, the valve body 3a is pressed against a side surface of the protrusion 2e facing the first high pressure chamber 5. As a result, the valve groove 2h is closed by the valve body 3 a. Moreover, the side surface of the protrusion 2e against which the valve body 3 a is abutted is inclined such that an outside part of the side surface in the radial direction is closer to the low pressure chamber 8 than an inside part of the side surface in the radial direction, which is closer to the first high pressure chamber 5. Therefore, when the valve body 3a is pressed against the side surface, the valve body 3a is pressed toward outside in the radial direction. The outer surface of the valve body 3a having the circular arcuate configuration is pressed to contact the inner circumferential surface of the middle-diameter hole portion 1d, thereby sealing between the inner circumferential surface of the middle-diameter hole portion 1d and an outer circumferential surface of the protrusion 2e. A position of the valve body 3a (valve 3) at this time is a closed position.

When the valve 3 is in the closed position, the valve groove 2h is closed by the valve body 3a. At the same time, the valve body 3a is pressed to contact the inner circumferential surface of the middle-diameter hole portion 1d, thereby sealing between the inner circumferential surface of the middle-diameter hole portion 1d and the outer circumferential surface of the protrusion 2e. In this manner, the first high pressure chamber 5 and the low pressure chamber 8 are more strictly isolated from each other. Therefore, the fluid in the first high pressure chamber 5 cannot flow into the low pressure chamber 8 via the valve groove 2h. This causes the fluid in the first high pressure chamber 5 to flow into the low pressure chamber 8 via the slight gap formed between the outer surface of the rotor 2 and the inner surface of the receiving hole 1b. The gap serves as an orifice. Therefore, when the rotor 2 is rotated in the counter-clockwise direction (abutment direction) in FIG. 6, the rotation speed of the rotor 2, which is maintained at a low speed by the resistance of the fluid flowing from the second high pressure chamber 6 to the damper chamber 7, is further reduced.

As shown in FIGS. 4 and 10, a pair of arms 3b, 3b are formed in a surface of the valve body 3a opposed to the protrusion 2e. The arms 3b, 3b extend in a circumferential direction of the middle-diameter hole portion 1d. A length of the arm 3b is longer than a dimension of the protrusion 2e in the circumferential direction. The arm 3b passes through the valve groove 2h in the circumferential direction. The arms 3b, 3b are arranged in a width direction of the valve groove 2h (axial direction of the receiving hole 1b) such that the arms 3b, 3b are spaced from each other. One of the arms 3b, 3b is in contact with a one side surface of the valve groove 2h in the width direction and a bottom surface of the valve groove 2h. The other of the arms 3b, 3b is in contact with the other side surface of the valve groove 2h in the width direction and the bottom surface of the valve groove 2h. Moreover, a height of the arm 3b is generally a same as a depth of the valve groove 2h, and a surface of the arm 3b located outside in the radial direction is in contact with the inner circumferential surface of the middle-diameter hole portion 1d. Accordingly, when the valve body 3a is spaced from the protrusion 2e to open the valve groove 2h, the fluid flows through a portion of the valve groove 2h between the arms 3b, 3b. A flow cross-sectional area between the arms 3b, 3b is designed to be large enough to allow the fluid to flow substantially without resistance.

An engagement protrusion (blocker) 3c is formed in a distal end portion of each of the arms 3b, 3b. The engagement protrusions 3c, 3c are respectively disposed in surfaces of the arms 3b, 3b respectively oriented in directions in which the arms 3b, 3b are spaced away from each other in the axial direction of the receiving hole 1b. The engagement protrusions 3c, 3c are protruded from the surfaces such that the engagement protrusions 3c, 3c are spaced away from each other along the axial direction of the receiving hole 1b. When the valve body 3a is spaced from the closed position toward the inside of the first high pressure chamber 5 by a predetermined distance as shown in FIGS. 5 and 7, the engagement protrusion 3c is abutted against a surface of the protrusion 2e facing the low pressure chamber 8, thereby prohibiting the valve body 3a (valve 3) from moving toward the first high pressure chamber 5. A position of the valve 3 at this tine is an open position (A position of the engagement protrusion 3c at this time is a blocking position as to be described later.). When the valve 3 is in the open position, the valve body 3 a is spaced from the protrusion 2e. As a result, the valve groove 2h is opened, thereby causing the first high pressure chamber 5 and the low pressure chamber 8 to communicate with each other via the valve groove 2h (actually, a space between the arms 3b, 3b).

Let us assume that the valve 3 is in the closed position. In this condition, when the rotor 2 is rotated in the clockwise direction in FIGS. 4 to 7, the fluid in the low pressure chamber 8 flows toward the first high pressure chamber 5 via the valve groove 2h. Then the flow of the fluid moves the valve 3 in a direction from the closed position toward the open position (counter-clockwise direction in FIGS. 4 to 7). When the valve 3 is moved to the open position, the engagement protrusion 3c is abutted against the protrusion 2e, thereby causing the valve 3 to be stopped at the open position. In this condition, the valve groove 2h is open, allowing the fluid in the low pressure chamber 8 to flow into the first high pressure chamber 5 via the valve groove 2h substantially without resistance. Therefore, the rotor 2 can be rotated in the clockwise direction of FIGS. 4 to 7 at a higher speed than when the valve 3 is in the closed position although the rotation speed of the rotor 2 is maintained low by the resistance against the fluid flowing into the second high pressure chamber 6 from the damper chamber 7.

As shown in FIGS. 4 to 7, clearance grooves 2p, 2p are formed in the outer circumferential surface of the damper shaft portion 2c. One of the clearance grooves 2p extends in the clockwise direction from a surface of the protrusion 2e facing the low pressure chamber 8. The other of the clearance grooves 2p extends in the clockwise direction from a surface of the protrusion 2f facing the damper chamber 7. The clearance grooves 2p, 2p have equal length in a circumferential direction. The length of the clearance grooves 2p, 2p in the circumferential direction is generally half as long as a distance between the protrusions 2e, 2f in the circumferential direction.

As shown in FIG. 5, when the rotor 2 in a state in which the protrusions 2e, 2f are respectively close to the elongated raised portions 1g, 1f is rotated in the counter-clockwise direction, in an initial stage of the rotation, the fluid in the first high pressure chamber 5 flows into the damper chamber 7 via one of the clearance grooves 2p and the fluid in the second high pressure chamber 6 flows into the low pressure chamber 8 via the other of the clearance grooves 2p. Therefore, in the initial stage of the rotation in the counter-clockwise direction, the rotor 2 can be rotated at a relatively high speed. Depths of the clearance grooves 2p, 2p become increasingly shallow as distances from the protrusions 2e, 2f increase. Therefore, the rotation speed of the rotor 2 in the counter-clockwise direction can be gradually reduced. When the elongated raised portions 1f, 1g are moved beyond the clearance grooves 2p, 2p, an inherent damping effect of the rotational damper A can be achieved.

As shown in FIG. 4, when the rotor 2 in a state in which the protrusions 2e, 2f are respectively close to the elongated raised portions 1f, 1g is rotated in the clockwise direction, in an initial stage of the rotation, a normal damping effect by the second high pressure chamber 6 and the damper chamber 7 can be achieved since the clearance grooves 2p, 2p are respectively spaced from the elongated raised portions 1f, 1g in the circumferential direction. No damping effect can be achieved by the first high pressure chamber 5 and the low pressure chamber 8 because they can communicate with each other via the valve groove 2h. When the elongated raised portion 1f come to face the clearance groove 2p accompanying the rotation of the rotor 2 in the clockwise direction, the fluid in the second high pressure chamber 6 come to flow into the damper chamber 7 via the clearance groove 2p. Therefore, the damper effect is reduced after that, allowing the rotor 2 to be rotated in the clockwise direction at a relatively high speed.

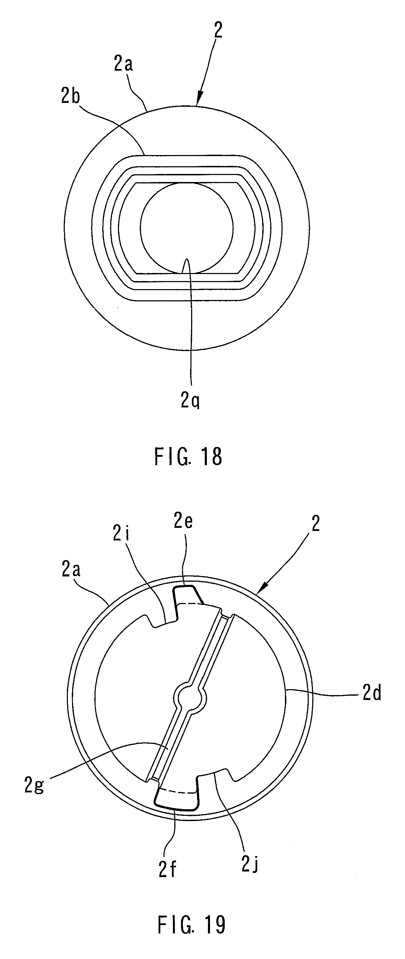

As shown in FIGS. 19, 22 to 25, 30 and 31, pass-through grooves 2i, 2j are formed in the annular protrusion 2d of the rotor 2. The pass-through grooves 2i, 2i extend from one end surface to the other end surface of the annular protrusion 2d along an axis of the annular protrusion 2d. As shown in FIG. 19, one of the pass-through grooves 2i is disposed adjacent to the end surface of the protrusion 2e facing the low pressure chamber 8. The other of the pass-through grooves 2j is disposed adjacent to the end surface of the protrusion 2f facing the damper chamber 7.

The pass-through grooves 2i, 2j respectively have cross-sectional configurations generally same as those of the elongated raised portions 1f, 1g and the pass-through grooves 2i, 2j respectively have dimensions generally equal to those of the elongated raised portions 1f, 1g so that the elongated raised portions 1f, 1 g can respectively pass through the pass-through grooves 2i, 2j. Moreover, the pass-through grooves 2i, 2j are arranged such that the elongated raised portions 1f, 1g are respectively opposed to the pass-through grooves 2i, 2j when the rotor 2 is in a predetermined initial position with respect to the damper body 1 in a circumferential direction with an axis of the damper body 1 and an axis of the rotor 2 coinciding with each other. Therefore, when the rotor 2 in the initial position is inserted into the receiving hole 1b, the elongated raised portions 1f, 1g relatively pass through the pass-through grooves 2i, 2j and enter a space between the large-diameter shaft portion 2a and the annular protrusion 2d. After that, the rotor 2 is rotated in the counter-clockwise direction (abutment direction) in FIGS. 4 to 7. This causes the elongated raised portions 1f, 1g to be spaced from the pass-through grooves 2i, 2j in the circumferential direction. The opposite end surfaces of the elongated raised portions 1f, 1g respectively contact a basal end surface of the large-diameter shaft portion 2a and a distal end surface of the annular protrusion 2d, thereby positioning the rotor 2 with respect to the damper body 1 in the axial direction thereof. Moreover, the annular protrusion 2d contacts the basal end surfaces of the elongated raised portions 1f, 1g, thereby prohibiting the rotor 2 from getting out of the damper body 1.

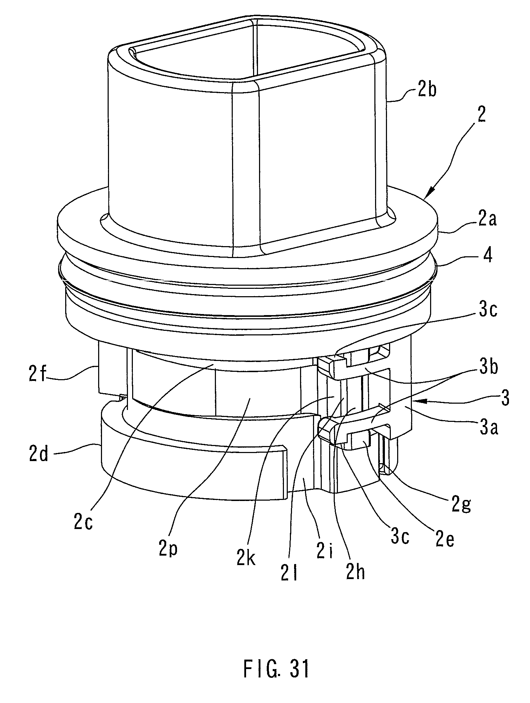

As shown in FIG. 31, when the valve 3 is in the open position, distal end portions of the arms 3b, 3b of the valve 3 and the engagement protrusions 3c, 3c are positioned inside the pass-through groove 2j in the circumferential direction. It is because the engagement protrusion 3c is in contact with the end surface of the protrusion 2e facing the low pressure chamber 8. When the valve 3 is in the closed position, the distal end portions of the arms 3b, 3b and the engagement protrusions 3c, 3c are positioned deeper inside the pass-through groove 2j in the circumferential direction than when the valve 3 is in the open position. Regardless of whether the valve 3 is in the open position or in the closed position, when the rotor 2 rotated in the clockwise direction in FIGS. 4 to 7 towards the initial position reaches a predetermined position, the engagement protrusion 3c is abutted against the elongated raised portion 1g as shown in FIG. 5, and consequently, the protrusion 2e is abutted against the elongated raised portion 1g via the engagement protrusion 3c. This causes the rotor 2 to be stopped. At this time, the rotor 2 is spaced from the initial position in the clockwise direction by a distance corresponding to a dimension of the engagement protrusion 3c in the circumferential direction. The elongated raised portions 1f, 1g at this time is spaced from the pass-through grooves 2i, 2j in the clockwise direction by a distance corresponding to the dimension of the engagement protrusion 3c in the circumferential direction. Therefore, the elongated raised portions 1f, 1g cannot pass through the pass-through grooves 2i, 2j. A rotational position of the rotor 2 when the protrusion 2e is abutted against the elongated raised portion 1g via the engagement protrusions 3c is a rotational limit position in the clockwise direction.

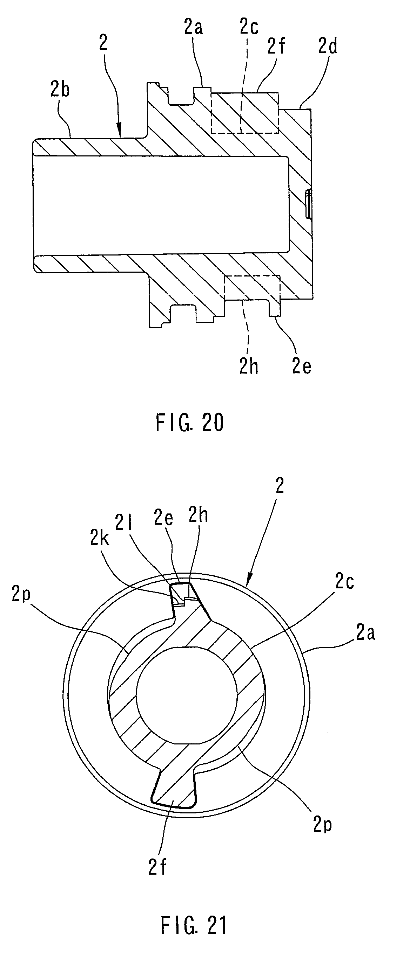

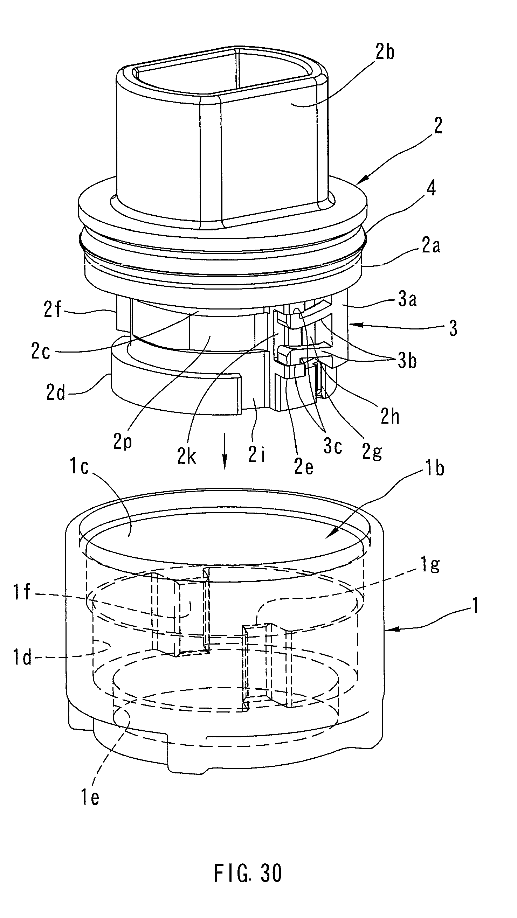

As shown in FIG. 30, before the rotor 2 is inserted into the receiving holelb, the valve 3 (engagement protrusion 3c) is positioned in an allowing position so that the elongated raised portions 1f, 1g can pass through the pass-through grooves 2i, 2j. Specifically, as shown in FIGS. 21, 22 and 30, a catch groove 2k is formed in the bottom surface of the valve groove 2h. The catch groove 2k extends in a longitudinal direction of the bottom surface of the valve groove 2h (axial direction of the rotor 2) from one end to the other end of the bottom surface of the valve groove 2h. The catch groove 2k is disposed in a distal end portion of the valve groove 2h on the low pressure chamber 8 side. One side portion of the catch groove 2k on the low pressure chamber 8 side is open to the low pressure chamber 8. A side surface of the catch groove 2k in the other side portion, which is a surface formed between a bottom surface of the catch groove 2k and the bottom surface of the valve groove 2h, is a flat surface extending orthogonally to the circumferential direction. The flat surface serves as a catch surface 21.

As shown in FIGS. 4, 6 and 26 to 29, the engagement protrusion 3c of the valve 3 is protruded from the arm 3b also in a direction toward inside in the radial direction of the rotor 2. Shape and dimensions of an end portion of the engagement protrusion 3c that is protruded (to be referred to as an inner end portion of the engagement protrusion 3c hereinafter) are determined such that when the arms 3b, 3b are elastically deformed such that distal end portions of the arms 3b, 3b approach each other by a predetermined distance, the inner end portions of the engagement protrusions 3c, 3c can respectively enter opposite end portions of the catch groove 2k in a longitudinal direction (axial direction of the receiving hole 1b). In a condition where the inner end portions of the engagement protrusions 3c, 3c are in the catch groove 2k, when the arms 3b, 3b are elastically deformed to return to their original shapes, the engagement protrusions 3c, 3c are respectively pressed to contact an end surface of the valve groove 2h and an end surface of the catch groove 2k in the axial direction of the receiving hole 1b. Furthermore, the inner end portion of the engagement protrusion 3c is contacted with the catch surface 21 of the catch groove 2k. The position of the engagement protrusion 3c (valve 3) at this time is the allowing position.

When the valve 3 is in the allowing position as shown in FIG. 30, a front surface of the engagement protrusion 3c in a direction from the first high pressure chamber 5 to the low pressure chamber 8 is positioned at a same position in the circumferential direction as a side surface of the pass-through groove 2j on the protrusion 2e side or the front surface of the engagement protrusion 3c is slightly spaced from the side surface of the pass-through groove 2i in a direction toward the first high pressure chamber 5. In other words, the valve 3 including the engagement protrusion 3c is in contact with the side surface of the pass-through groove 2i adjacent to the protrusion 2e or the entirety of the valve 3 is spaced from the side surface of the pass-through groove 2i in the direction toward the first high pressure chamber 5. Accordingly, when the valve 3 is in the allowing position, the elongated raised portions 1f, 1g can respectively pass through the pass-through grooves 2i, 2j.

When the valve 3 in the allowing position is moved from the first high pressure chamber 5 side toward the low pressure chamber 8 through a predetermined distance, the engagement protrusion 3c gets out of the valve groove 2h and the catch groove 2k toward the low pressure chamber 8. This causes the arms 3b, 3b to return to their original shapes by their own elasticity. Consequently, the arms 3b, 3b are respectively pressed to contact opposite end surfaces of the valve groove 2h and a surface of the engagement protrusion 3c facing towards the first high pressure chamber 5 is contacted with the end surface of the protrusion 2e facing the low pressure chamber 8. As a result, the valve 3 (engagement protrusion 3c) is prohibited from moving in a direction (abutment direction) from the low pressure chamber 8 to the first high pressure chamber 5. A position of the valve 3 (engagement protrusion 3c) at this time is a blocking position. When the valve 3 is in the blocking position, the engagement protrusion 3c is positioned inside the pass-through groove 2j in the circumferential direction. Therefore, if an attempt is made to rotate the rotor 2 in the clockwise direction up to the initial position, the protrusion 2e is abutted against the elongated raised portion 1g via the engagement protrusion 3c, thereby causing the rotor 2 to be stopped before the initial position by a distance corresponding to the engagement protrusion 3c. As a result, the elongated raised portions 1f, 1g are spaced from the pass-through grooves 2i, 2j in the circumferential direction by the distance corresponding to the dimension of the engagement protrusion 3c, and the entirety of the elongated raised portions 1f, 1g can not respectively be opposed to the pass-through grooves 2i, 2j. Therefore, even if an attempt is made to pull the rotor 2 out of the receiving hole 1b, the elongated raised portions 1f, 1g can not enter the pass-through grooves 2i, 2j, and the annular protrusion 2d is abutted against the distal end surfaces of the elongated raised portions 1f, 1g. Thus, the rotor 2 is surely prohibited from getting out of the receiving hole 1b.

When a rotational damper A having the features described above is to be assembled, the valve 3 is assembled to the rotor 2 beforehand such that the valve 3 is positioned in the allowing position. Then the axis of the rotor 2 is aligned with the axis of the receiving hole 1b of the damper body 1 and the rotor 2 is positioned in the initial position. A predetermined amount of fluid is provided inside the damper body 1 beforehand. Then the rotor 2 is inserted into the receiving hole 1b. The rotor 2 is inserted into the receiving hole 1b until the elongated raised portions 1f, 1g relatively passes through the pass-through grooves 2i, 2j and the large-diameter shaft portion 2a is abutted against the elongated raised portions 1f, 1g. After that, the rotor 2 is rotated with respect to the damper body 1 in the counter-clockwise direction (abutment direction) in FIGS. 4 to 7.

When the rotor 2 is rotated in the counter-clockwise direction at a high speed, the valve 3 (engagement protrusion 3c) is moved from the allowing position to the blocking position by the fluid flowing from the first high pressure chamber 5 toward the low pressure chamber 8. Therefore, when the rotor 2 is rotated in the counter-clockwise direction at a high speed, the fluid serves as a mover that moves the engagement protrusion 3c from the allowing position to the blocking position.

When the rotor 2 is rotated in the counter-clockwise direction at a low speed, the valve 3 is not moved from the allowing position to the blocking position by the fluid but stays in the allowing position because a force of the fluid pressing the valve 3 is not great enough. When the rotor 2 is rotated further in the counter-clockwise direction, eventually the valve body 3a of the valve 3 is abutted against the elongated raised portion 1f, and the valve 3 is moved from the allowing position to the blocking position accompanying the rotation of the rotor 2. Therefore, when the rotor 2 is rotated in the counter-clockwise direction at a low speed, the elongated raised portion 1f also serves as a mover (abutment portion) that moves the engagement protrusion 3c from the allowing position to the blocking position. After the rotor 2 is inserted into the receiving hole 1b, the valve body 3 is moved from the allowing position to the blocking position by rotating the rotor 2 from the initial position in the counter-clockwise direction, and the assembly of the rotational damper A is completed. The rotor 2 is rotatable in the counter-clockwise direction until the protrusion 2f is abutted against the elongated raised portion 1g after the valve 3 is moved from the allowing position to the blocking position. A rotational position of the rotor 2 at this time is a rotational limit position in the counter-clockwise direction. When the rotor 2 is in the rotational limit position in the counter-clockwise direction and the valve 3 is in the closed position, the valve body 3a of the valve 3 is spaced from the elongated raised portion 1f in the clockwise direction.

In the rotational damper A assembled in this manner, the rotor 2 is prohibited from getting out of the receiving hole 1b by the abutment of the annular protrusion 2d against the elongated raised portions 1f, 1 g. Therefore, there is no need for a lid for retaining the rotor 2, labor for threadably fixing the lid can be saved. Thus, the manufacturing cost of the rotational damper A can be reduced.

In this embodiment, the elongated raised portions 1f, 1g can not be respectively positioned in same positions as the pass-through grooves 2i, 2j in the circumferential direction because the rotor 2 is prohibited from being rotated up to the initial position by the engagement protrusion 3c. Therefore, the annular protrusion 2d can be surely abutted against the elongated raised portions 1f, 1g, surely prohibiting the rotor 2 from getting out of the receiving hole 1b.

Other embodiments of the present invention will now be described. Only components different from those described in the embodiment given above will be described. Components same as those described in the embodiment given above will be given same reference numerals and description thereof will be omitted.

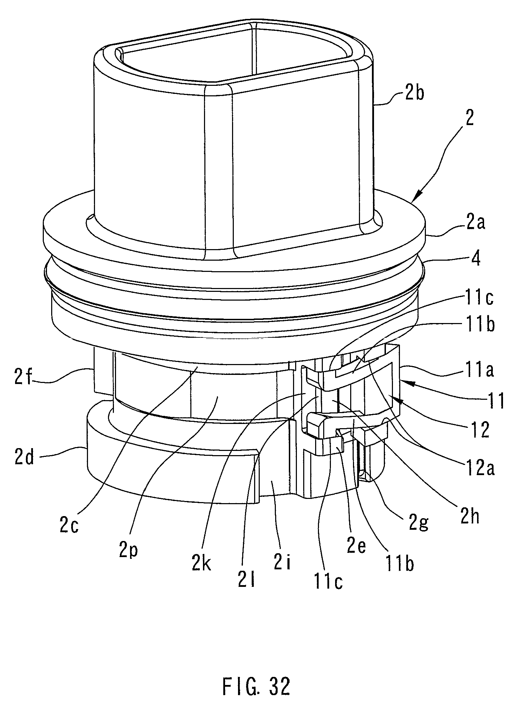

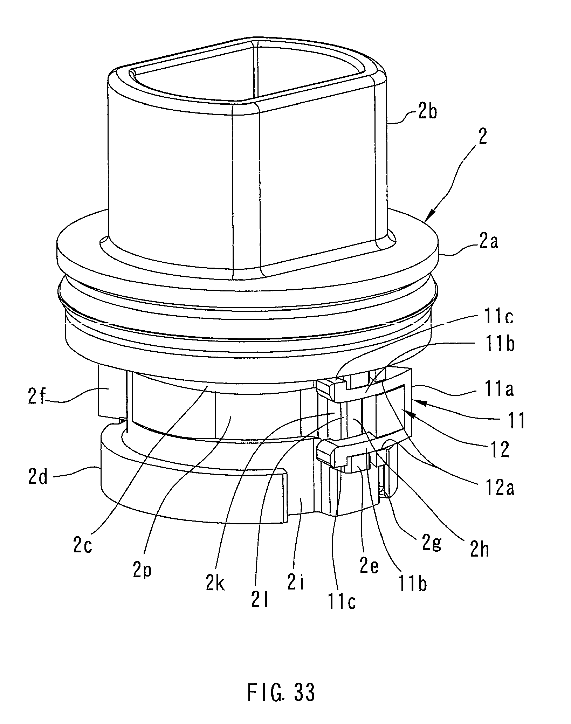

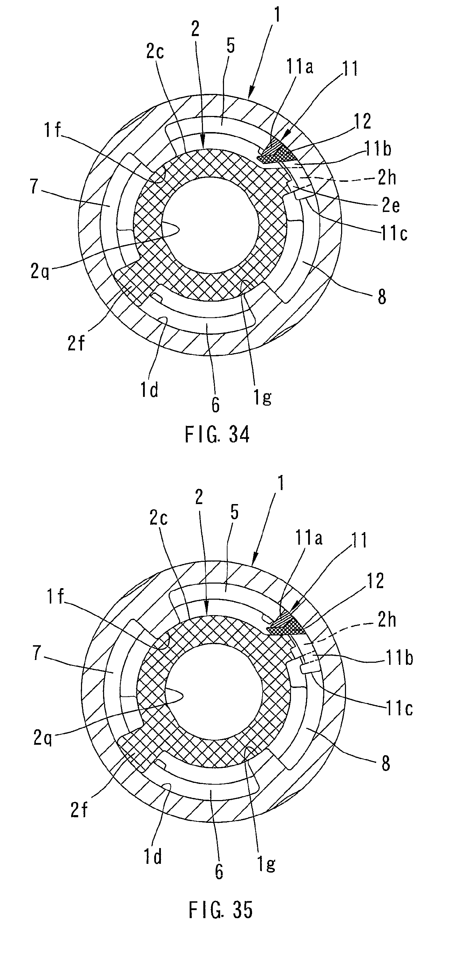

FIGS. 32 to 35 show a second embodiment of the present invention. The second embodiment includes a blocker 11 and a valve 12 provided separately from each other. The blocker 11 is made of an elastic member. The blocker 11 has a same shape as the valve 3 of the first embodiment except that the blocker 11 has a connecting portion 11a in place of the valve body 3 a of the valve 3. Specifically, the blocker 11 includes a pair of arms 11b, 11b and a pair of engagement protrusions 11c, 11c respectively corresponding to the arms 3b, 3b and the engagement protrusions of the valve 3. The connecting portion 11a connects basal end portions of the pair of arms 11b, 11b. A length of the arm 11b is slightly longer than the length of the arm 3b. A shape and dimensions of the engagement protrusion 11c are generally same as those of the engagement protrusion 3c. The engagement protrusion 11c performs a same function as the engagement protrusion 3c. Surfaces of the connecting portion 11a and the arms 11b, 11b adjacent thereto facing outside in a radial direction are circular arcuate surfaces having a diameter that is a same as an inner diameter of the middle-diameter hole portion 1d. The surfaces of the connecting portion 11a and the arms 11b, 11b are in contact with the inner circumferential surface of the middle-diameter hole portion 1d such that the surfaces can slide in the circumferential direction.

Grooves 12a, 12a are formed in a surface of the valve 12 facing outside in the radial direction. The basal end portions (end portions on the connecting portion 11a side) of the arms 11b, 11b are respectively fitted in the grooves 12a, 12a without gap. Moreover, the valve 12 is contacted with the connecting portion 11a. By this arrangement, the valve 12 is connected to the blocker 11 such that the valve 12 moves generally in unity with the blocker 11. Accordingly, the blocker 11 and the valve 12 are moved together between a closed position and an open position (blocking position) in the circumferential direction. An outer circumferential surface of the valve 12 is a circular arcuate surface having a diameter that is a same as the inner diameter of the middle-diameter hole portion 1d. The outer circumferential surface of the valve 12 is in contact with the inner circumferential surface of the middle-diameter hole portion 1d such that the surfaces can slide in the circumferential direction.

When the valve 12 is in the closed position, the valve 12 closes a space between the arms 1b, 1b that in effect is a flow space of the valve groove 2h. At the same time, the valve 12 is pressed against an outer circumferential surface of the middle-diameter hole portion 1d. This shuts off communication between the first high pressure chamber 5 and the low pressure chamber 8. It is preferable that valve 12 is made of a material having a relatively high flexibility so that the valve 12 can be pressed to contact the inner circumferential surfaces of the protrusion 2e and the middle-diameter hole portion 1d more closely. On the other hand, it is preferable that the blocker 11 is made of a material having higher strength than the valve 12 on condition that the material has an enough elasticity to prevent the valve 12 from being greatly deformed. Since the blocker 11 and the valve 12 are formed separately in this embodiment, materials for the blocker 11 and the valve 12 can be independently selected as appropriate.

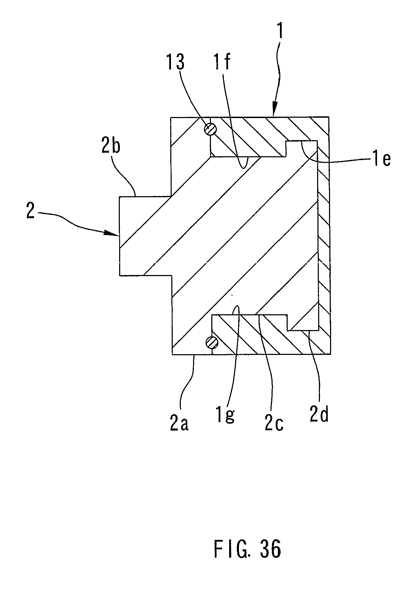

FIG. 36 shows a third embodiment of the present invention. In this embodiment, the elongated raised portions 1f, 1 g extend up to an end edge of the opening of the receiving hole 1b and the distal end surfaces of the elongated raised portions 1f, 1g are positioned coplanar with a distal end surface of the damper body 1. Corresponding to this arrangement, the large-diameter shaft portion 2a of the rotor 2 is positioned outside the receiving hole 1b and the basal end surface of the large-diameter shaft portion 2a is rotatably contacted with the distal end surface of the damper body 1 and the distal end surfaces of the elongated raised portions 1f, 1g. A gap between the basal end surface of the large-diameter shaft portion 2a and the distal end surface of the damper body 1 is sealed by a sealing member 13 such as an O-ring.

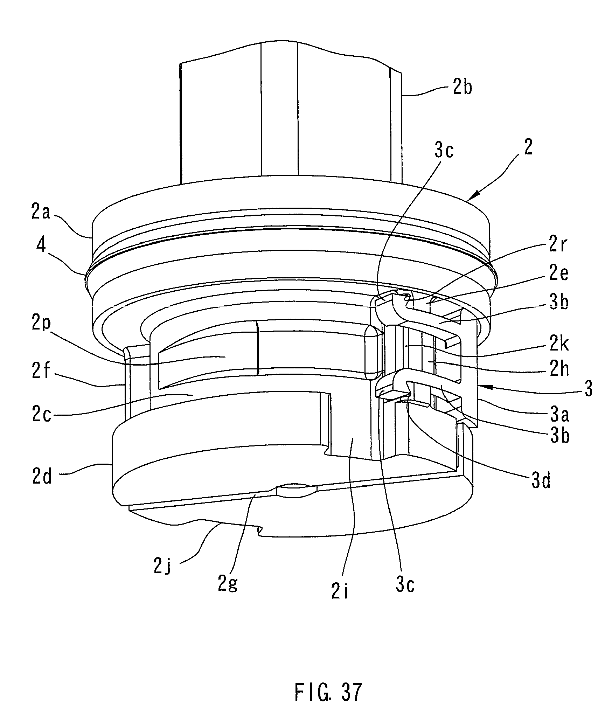

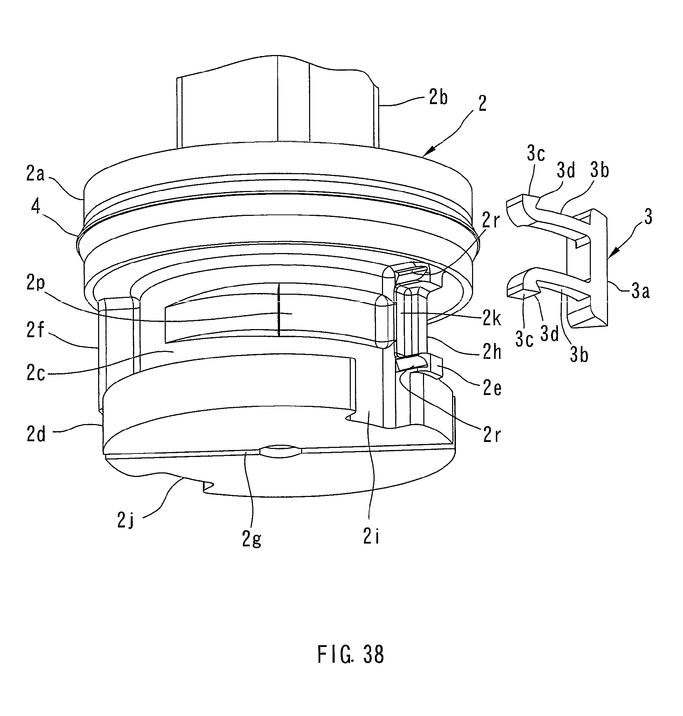

FIGS. 37 and 38 show a rotor 2 and a valve 3 used in a fourth embodiment of the present invention. The rotor 2 of the fourth embodiment is different from the rotor 2 of the first embodiment only in that the rotor 2 of the fourth embodiment includes two engagement recesses 2r, 2r. The two engagement recesses 2r, 2r are respectively formed in the surfaces of the protrusions 2e, 2e facing the low pressure chamber 8. The engagement recesses 2r, 2r are respectively disposed in end portions of the surfaces of the protrusions 2e, 2e opposed to each other with the valve groove 2h disposed therebetween. The engagement recess 2r has a generally triangular configuration when viewed from the radial direction of the rotor 2. A side surface of the engagement recess 2r adjacent to the valve groove 2h is inclined such that one end portion of the side surface on the valve groove 2h side is closer to the low pressure chamber 8 than the other end portion of the side surface, which is closer to the first high pressure chamber 5.

On the other hand, two engagement jutting portions 3d, 3d corresponding to the engagement recesses 2r, 2r are formed in the valve 3. The engagement jutting portions 3d, 3d are respectively formed in surfaces of the engagement protrusions 3c, 3c opposed to the engagement recesses 2r, 2r. Moreover, the engagement jutting portion 3d has a shape similar to that of the engagement recess 2r when viewed from the radial direction of the rotor 2. Therefore, when the valve 3 reaches the blocking position, the engagement jutting portions 3d, 3d fit into the engagement recesses 2r, 2r to be engaged therewith. In this engaged state, the engagement protrusions 3c, 3c are prohibited from moving toward the valve groove 2h, approaching each other by a force of a predetermined magnitude. This is because side surfaces of the engagement recesses 2r, 2r and the engagement jutting portions 3d, 3d adjacent to the valve groove 2h are inclined towards the low pressure chamber 8 from the first high pressure chamber 5 side as the side surfaces approach the valve groove 2h. Therefore, accidental entrance of the engagement protrusions 3c, 3c into the valve groove 2h in the axial direction of the rotor 2, which might cause the valve 3 to be moved from the blocking position to the allowing position, can be prevented. As is clear from the above, the engagement recesses 2r, 2r and the engagement jutting portions 3d, 3d respectively engaged with one another constitute an engagement mechanism that prohibits the movement of the engagement protrusion (blocker) 3c of the valve 3 from the blocking position toward the allowing position.

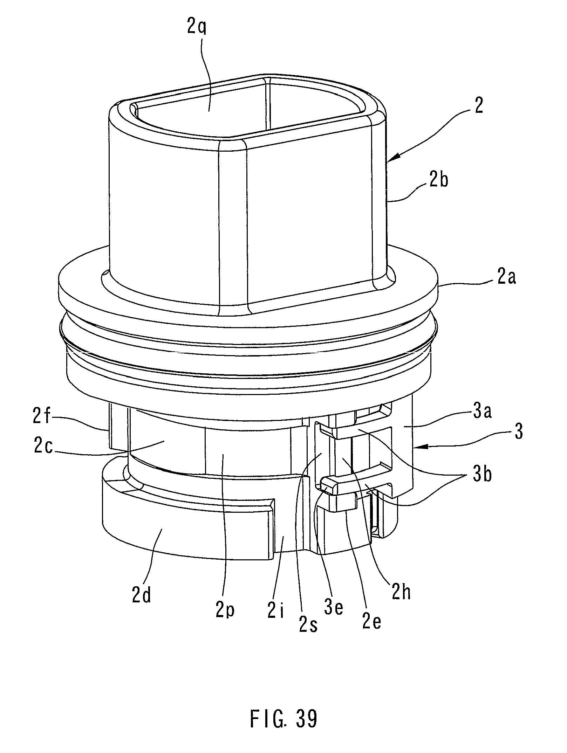

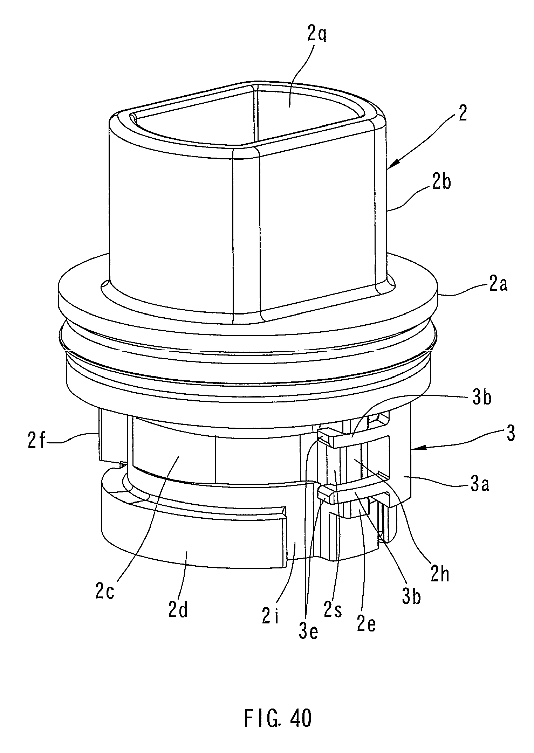

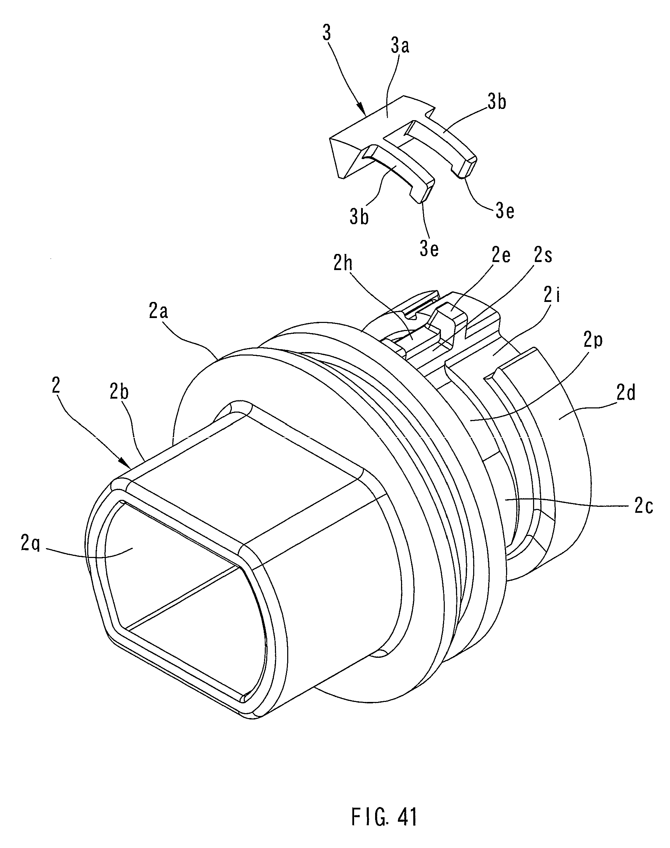

FIGS. 39 to 41 show a rotor 2 and a valve 3 used in a fifth embodiment of the present invention. A clearance groove 2s in place of the catch groove 2k is formed in the rotor 2. The clearance groove 2s has a same shape and same dimensions as the catch groove 2k and is disposed at a same location as the catch groove 2k. Accordingly, the rotor 2 of the fifth embodiment has substantially a same shape and same dimensions as the rotor 2 of the first embodiment.

On the other hand, an abutment protrusion 3e in place of the engagement protrusion 3c is formed in the distal end portion of the arm 3b of the valve 3. The abutment protrusion 3e is protruded inward in a radial direction of the rotor 2. As shown in FIG. 39, the abutment protrusion 3e is disposed such that the abutment protrusion 3e is abutted against a side surface of the clearance groove 2s on the first high pressure chamber 5 side (surface facing the lower pressure chamber 8)when the valve 3 is moved to the open position. Moreover, a shape and dimensions of the abutment protrusion 3e are determined such that an end surface of the abutment protrusion 3e facing the low pressure chamber 8 is positioned at a same position as the side surface of the pass-through groove 2i adjacent to the protrusion 2e in the circumferential direction or the entirety of the abutment protrusion 3e enters the clearance groove 2s in a condition where the abutment protrusion 3e is abutted against the side surface of the clearance groove 2s on the first high pressure chamber 5 side. Accordingly, when the valve 3 is in the open position, the entirety of the valve 3 including the abutment protrusion 3e is positioned closer to the first high pressure chamber 5 than the pass-through groove 2j. Therefore, the valve 3 cannot prohibit the rotor 2 from being rotated to the initial position. When the rotor 2 is rotated to the initial position, the annular protrusion 2d cannot prohibit the rotor 2 from getting out of the receiving hole 1b since the first elongated raised portions 1f, 1g are respectively positioned in same positions as the pass-through grooves 2i, 2j in the circumferential direction.

When the valve 3 is moved from the open position toward the closed position, at least the distal end portion of the arm 3b and the abutment protrusion 3e are positioned inside the pass-though groove 2j in the circumferential direction. However, when the rotor 2 in this condition is rotated toward the initial position, the first elongated raised portion 1g is abutted against the distal end portion of the arm 3b and the abutment protrusion 3e and moves the valve 3 to the open position. Therefore, the rotor 2 can be rotated to the initial position, and the annular protrusion 2d cannot prohibit the rotor 2 from getting out of the receiving hole 1b.

As mentioned above, in the rotational damper of the fifth embodiment, the rotational damper alone cannot prohibit the rotor 2 from being rotated to the initial position, and thus cannot prohibit the rotor 2 from getting out of the receiving hole 1b. However, depending on how the rotational damper is used, the rotational damper of the fifth embodiment can surely prohibit the rotor 2 from getting out of the receiving hole 1b.

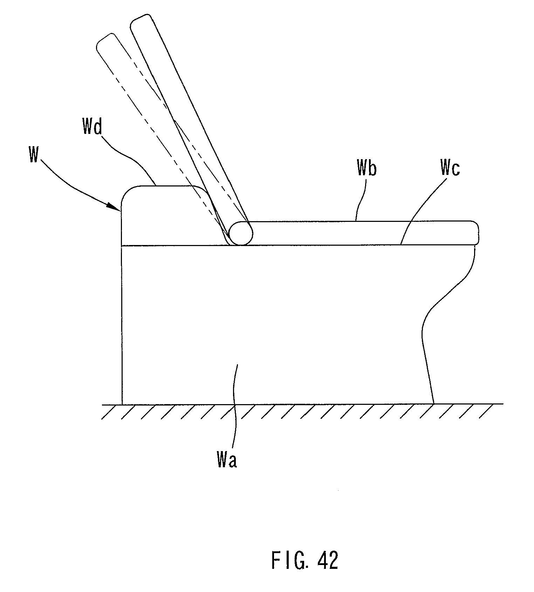

FIG. 42 shows a toilet W in which the rotational damper of the fifth embodiment is used. The toilet W includes a toilet body Wa and a toilet seat Wb. One of the damper body 1 and the rotor 2 is non-rotatably disposed in the toilet body Wa. On the other hand, the other of damper body 1 and the rotor 2 is non-rotatably disposed in the toilet seat Wb. By this arrangement, the toilet seat Wb is rotatably supported by the toilet body Wa via the rotational damper of the fifth embodiment.

The toilet seat Wb can be rotated between a closed position indicated by solid lines and an open position indicated by broken lines in FIG. 42. The closed position of the toilet seat Wb is determined by the abutment of the toilet seat Wb against a top surface Wc of the toilet body Wa. On the other hand, the closed position of the toilet seat Wb is determined by the abutment of the toilet seat Wb against a tank Wd formed in a rear end portion of the top surface Wc of the toilet body Wa.

When the toilet seat Wb is rotated from the closed position toward the open position, the rotor 2 is rotated toward the initial position. However, when the toilet seat Wb is rotated up to the open position, the rotor 2 has not yet reached the initial position. The rotor 2 is in a position before the initial position by 10 to 20 degrees, for example. When the toilet seat Wb is rotated beyond the open position up to a position indicated by imaginary lines in FIG. 42, the rotor 2 reaches the initial position. However, when the toilet seat Wb reaches the open position, the toilet seat Wb is abutted against the tank Wd and cannot be rotated any further. Therefore, the rotor 2 cannot be rotated up to the initial position. Thus, the rotor 2 can be surely prevented from getting out of the receiving hole 1b of the damper body 1.

It is to be understood that the present invention is not limited to the embodiments described above, and various modifications may be adopted without departing from the spirit or scope of the invention.
For example, while in the embodiment described above, of the two protrusions 2e, 2f, only one protrusion 2e has the valve groove 2h and the valve 3 (12) disposed therein, a valve groove and a valve may also be disposed in the other protrusion 2f. In such a case, the communication groove 2g is not required. Conversely, neither of the two protrusions 2e, 2f may be provided with the valve groove or the valve. In such a case, the rotation of the rotor 2 can be maintained at a low speed regardless of whether the rotor 2 is rotated in a normal direction or a reverse direction.
In the embodiment described above, the fluid or the elongated raised portion 1f is also used as the mover. Alternatively, a protrusion may be formed in the inner circumferential surface of the middle-diameter hole portion 1d, and the valve 3 or the blocker 11 may be moved from the allowing position to the blocking position by being abutted against the protrusion.
While in the embodiment described above, the two elongated raised portions 1f, 1g and the two protrusions 2e, 2f are provided, alternatively, only one of the first elongated raised portions and only one of the protrusions may be provided. In such a case, the valve 3 (blocker 11 and the valve 12) should be provided in the protrusion.
Moreover, while in the embodiment described above, the pass-though grooves 2j, 2i are disposed adjacent to the protrusions 2e, 2f because the valve 3 having the engagement protrusion 3c or the blocker 11 is disposed in the protrusion 2e, the pass-though grooves 2j, 2i may be disposed spaced from the protrusions 2e, 2f. In such a case, the blocker should be provided in the outer circumferential surface of the damper shaft portion 2c adjacent to the pass-though grooves 2i, 2j.
Furthermore, while in the first and second embodiments, the end surface of the large-diameter shaft portion 2a and the end surface of the annular protrusion 2d are respectively rotatably contacted with the end surfaces of the elongated raised portions 1f, 1g, alternatively, the end surface of the large-diameter shaft portion 2a and the end surface of the annular protrusion 2d may be respectively opposed to the end surfaces of the elongated raised portions 1f, 1g with a slight gap therebetween, which gap may be used as an orifice for the fluid to pass therethrough.

### Industrial Applicability

The rotational damper according to the present invention may be used between a body and a rotatable member rotatably attached to the body such as a toilet body and a toilet seat.

### Reference Sings List

- A: rotational damper
- 1: damper body
- 1a: bottom
- 1b: receiving hole
- 1f: elongated raised portion (first elongated raised portion; mover; abutment portion)
- 1g: elongated raised portion
- 2: rotor
- 2a: large-diameter shaft portion
- 2d: annular protrusion (second annular protrusion)
- 2e: protrusion (second elongated raised portion)
- 2f: protrusion
- 2h: valve groove (communication passage)
- 2j: pass-through groove
- 2r: engagement recess
- 3: valve
- 3a: valve body
- 3c: engagement protrusion (blocker)
- 3d: engagement jutting portion
- 5: first high pressure chamber (high pressure chamber)
- 8: low pressure chamber
- 11: blocker
- 12: valve

## Claims

1. A rotational damper comprising:
a damper body having a receiving hole, one end portion of the receiving hole closed by a bottom, the other end portion of the receiving hole being open;
a rotor, a basal end portion of the rotor being insertable into the receiving hole from an opening of the receiving hole, the basal end portion of the rotor received in the receiving hole such that the rotor is rotatable about an axis of the receiving hole;
a first elongated raised portion extending in a direction of the axis of the receiving hole formed in an inner circumferential surface of the receiving hole; and
a second elongated raised portion disposed in an outer circumferential surface of the rotor, the first elongated raised portion and the second elongated raised portion dividing an annular space formed between the inner circumferential surface of the receiving hole and the outer circumferential surface of the rotor into a high pressure chamber and a low pressure chamber,
**characterized in that**:
the first elongated raised portion is disposed spaced from the bottom of the receiving hole toward the opening;
an annular protrusion is formed in the outer circumferential surface of the rotor, the annular protrusion rotatably received in a space between the bottom of the receiving hole and the first elongated raised portion in the receiving hole;
a pass-through groove is formed in the annular protrusion, the pass-through groove extending from one end surface of the annular protrusion to the other end surface of the annular protrusion, the first elongated raised portion being able to pass through the pass-through groove when the rotor is positioned in a predetermined initial position in a circumferential direction; and,
the rotor is prohibited from getting out of the receiving hole by abutment of the annular protrusion against the first elongated raised portion when the rotor is rotated and spaced from the initial position in the circumferential direction after the first elongated raised portion passes through the pass-through groove accompanying insertion of the rotor into the receiving hole.

2. The rotational damper according to claim 1, wherein the rotor is provided with a blocker, the blocker is movable from an allowing position to a blocking position, but the blocker is non-movable from the blocking position to the allowing position, the blocker in the allowing position allowing the rotor to be positioned in the initial position, the blocker in the blocking position prohibiting the rotor from being positioned in the initial position, thereby prohibiting the first elongated raised portion from passing through the pass-through groove;
the rotational damper further comprises a mover; and,
the mover moves the blocker from the allowing position to the blocking position when the rotor is rotated from the initial position in a predetermined abutment direction up to a predetermined abutment position after the rotor is inserted into the receiving hole from the opening of the receiving hole until the first elongated raised portion passes through the pass-through groove.

3. The rotational damper according to claim 2, wherein when the blocker is positioned in the allowing position, the blocker is positioned in front of the pass-through groove in the abutment direction and the blocker allows the first elongated raised portion to pass through the pass-through groove; and,
when the blocker is positioned in the blocking position, at least a portion of the blocker is protruded toward inside of the pass-through groove in a circumferential direction and the portion of the blocker is abutted against the first elongated raised portion, thereby prohibiting the rotor from being rotated from the abutment position side to the initial position, thereby prohibiting the first elongated raised portion from being positioned in a same position as the pass-through groove in the circumferential direction.

4. The rotational damper according to claim 2 or 3, wherein the mover is an abutment portion provided in the inner circumferential surface of the receiving hole;
the abutment portion is abutted against the blocker positioned in the allowing position when the rotor is rotated from the initial position to a position a predetermined distance before the abutment position; and after that,
the abutment portion moves the blocker from the allowing position to the blocking position accompanying the rotation of the rotor to the abutment position.

5. The rotational damper according to claim 4, wherein the first elongated raised portion is also used as the abutment portion.

6. The rotational damper according to any one of claims 2 to 5, wherein a communication passage allowing the high pressure chamber and the low pressure chamber to communicate with each other is formed in the second elongated raised portion;
a valve that opens and closes the communication passage is disposed in the rotor;
the blocker is integrally disposed in the valve; and,
the valve is movable between the allowing position and the blocking position together with the blocker.

7. The rotational damper according to any one of claims 2 to 6, wherein an engagement mechanism that prohibits the blocker from moving from the blocking position toward the allowing position is provided between the rotor and the blocker.
